# EUROPEAN PATENT SPECIFICATION

(11) **EP 0 861 714 B1**
(45) Date of publication and mention of the grant of the patent: **07.11.2001**
(21) Application number: 97103388.1
(22) Date of filing: 28.02.1997
(51) Int. Cl.: B29C 43/36, B29C 43/18, H04R 1/02, B29C 33/42

(54) **Composite molded product, production process and apparatus therefor**
Geformter Verbundkörper, Herstellungsverfahren dafür und angepasste Vorrichtung
Produit composite moulé, méthode de production et dispositif dédié

(43) Date of publication of application: 02.09.1998
(73) Proprietor: Yamakawa Industrial Co., Fuji-shi, Shizuoka (JP)
(72) Inventor: Terajima, Yasuhide, Fuji-shi, Shizuoka (JP)
(74) Representative: Weber, Joachim, Dr.

(56) References cited:
- EP-A- 0 255 509
- EP-A- 0 577 123
- EP-A- 0 582 075
- JP-A- 7 237 234
- JP-A- 8 156 141
- JP-A- 8 252 828
- US-A- 2 520 222
- US-A- 4 351 412

## Description

The present invention relates to a production process and an apparatus for a composite molded product and to a composite molded article to be used as interior parts of a vehicle, in which a skin material and a base member are integrally molded, a production process thereof, and an apparatus therefor.

EP-A-255,509 discloses a sound-permeable loudspeaker cover including a circle frame in which are arranged mutually crossing webs of a synthetic plastic material delimiting sound passage openings and a sound-permeable material which covers the sound passage openings. The process disclosed in this citation provides that openings are covered with a flat material and that bridges are arranged on both sides of the flat material. Thereby the material forming the bridges penetrates the flat material. The layer of the flat material is put into the cavity of a mold. Then a resin material for forming the bridges is introduced from both sides of the layer in such a way that it penetrates the flat material at least at some portions.

JP-A-07,237,234 discloses a process for producing a composite molded product being composed of a layer and a resin material. A first mold has an opening forming member projecting from the forming surface of the mold for forming an opening in the resin material. A second mold has a large recess to which the member projects. Two needles are provided for supporting the layer.

Conventionally, as interior parts of a vehicle, such as a lining of a vehicular door, a rear parcel shelf and so forth, a composite molded products, in which skin materials and base members are molded integrally, have been widely used.

On the other hand, in the recent years, for the purpose of enhancement of acoustic effect in a vehicular cabin, speakers are arranged in various positions in the vehicular cabin. In such a case, it is typical to preliminarily form an opening in the lining or so forth at a corresponding position to a speaker position and to fit a separately formed speaker cover or a speaker grill within the opening in order to affect for acoustic effect.

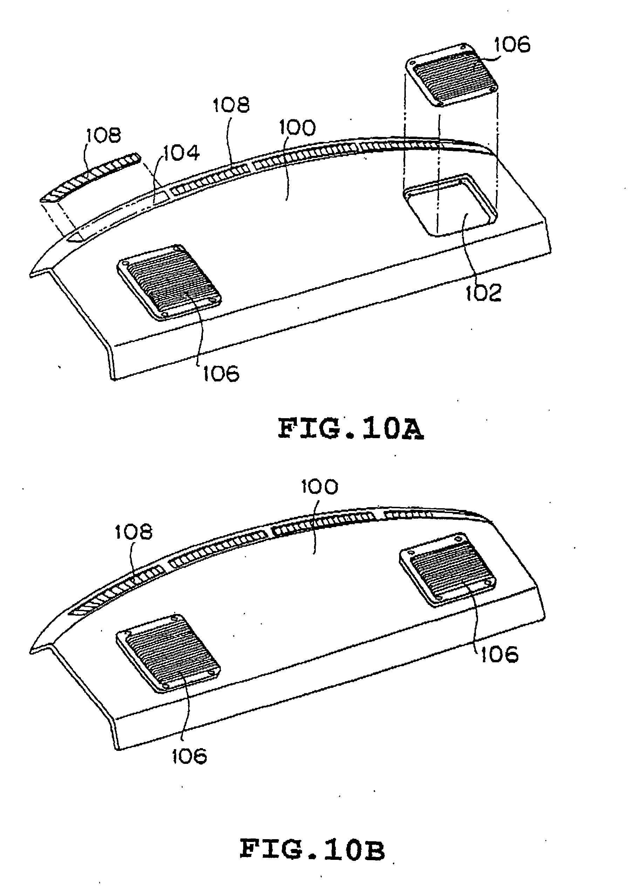

On example of a conventional rear parcel shelf is illustrated in Figs. 10A and 10B. In Fig. 10A, a rear parcel shelf main body 100 is prepared as an intermediate product by bonding a skin material after molding a base body of a resin with openings 102 for acoustic speaker and an opening 104 for ventilation, or, in the alternative, by forming the openings 102 and 104 for the acoustic speaker and ventilation after molding the base body resin and the skin material simultaneously as a composite molded product. On the other hand, two speaker grills 106 and four ventilation grills (hereinafter referred to as "drafter grill") 108 are prepared separately and fixed in the openings 102 and 104 of the main body 100 by means of resin clips or so forth after engaging and positioning therein, for obtaining a finished product shown in Fig. 10B.

However, the method, in which the speaker grills and the drafter grills are formed separately from the rear parcel shelf main body, has no problem in the acoustic effect, but encounters a problem in complicatedness in color matching and in cost for requiring separate molding dies.

As a solution for the problems set forth above, there have been proposed technologies to perform formation of openings in the base member and integrally forming of the base member and the skin material, simultaneously, as disclosed in Japanese Patent Application Laid-Open Nos. Heisei 6-15671, Heisei 6-15672 and Heisei 6-15673.

Namely, the foregoing publications are directed to the molded product in which a base member formed with a through opening for passing a sound and a surface material are integrally molded in the form of including the through opening, or in the form of excluding the through opening, simultaneously.

However, in such a conventional skin material integrated composite molded product, when it is applied for a rear parcel shelf, the skin material is exposed over the entire surface of the base member. In this case, in order to assure sufficient strength required in view of durability for avoiding rupture by contacting with passengers, a diameter of the opening to be formed may be limited. On the other hand, for better propagation of acoustic vibration, it is preferred to have a greater opening ratio. In order to compromise these requirements, it becomes necessary to form a large number of small diameter openings.

For providing a large number of small diameter openings, it becomes inherent to provide forming pins in the number corresponding to number of openings to be formed. This makes forming dies complicate and results in high cost. Also, mold releasing characteristics is degraded to restrict material of the base member, board thickness.

Moreover, in the external appearance, at a portion corresponding to the speaker grill, only a flat skin material is present. As a result, there is no room for obtaining a superior external appearance.

In view of the problems in the prior art as set forth above, it is an object of the present invention to provide a composite molded product which can assure sufficient strength of a skin material irrespective of a diameter of an opening, and permit optimal setting of an external appearance depending upon a portion to be applied.

Another object of the present invention is to provide a production process and apparatus which can produce the above-mentioned composite molded product at low cost.

A further object of the present invention is to provide a production apparatus which can produce the above-mentioned composite molded product at low cost.

In a first aspect of the present invention, there is provided a composite molded product comprising:
a main body formed of a base material of a thermoplastic resin and defining at least one through opening;
a porous skin material integrally molded with the main body by thermal fusing; and
at least one rib molded on a surface of the skin material at a position corresponding to the position of the at least one through opening, the being integrated with the main body through porous structure of the skin material.

Here, the main body may have at least one bridging member defining a plurality of through openings underlying the skin material, and the rib is arranged perpendicularly to the bridging member.

The at least one rib may be a plurality of parallel ribs.

The at least one rib may have a plurality of concentric ribs.

The at least one rib may be a mesh-shaped configuration, and the at least one bridging member is honeycomb-shaped.

The composite molded product may be used as an interior part of a vehicle.

In a second aspect of the present invention, there is provided a production process of a composite molded product comprising the steps of:
providing a first molding die having at least one opening forming member projecting from a first forming surface and having a predetermined dimension in lengthwise direction;
providing a second molding die having at least one rib forming groove on a second forming surface at a position corresponding to a position of the at least one opening forming member;
arranging a porous skin material between the first and second forming dies;
supplying a base material of a thermoplastic resin at least before curing, into a cavity defined between the first and second molding dies at the first forming die side of the skin material; and
clamping the first and second molding dies and applying a pressure for performing pressure molding.

The rib forming groove may be in length longer than the predetermined dimension in the lengthwise direction.

The opening forming member may be movable relative to the first molding die, and contacts with the second forming surface of the second molding die at initial stage of clamping step.

In a third aspect of the present invention, there is provided a producing apparatus for a composite molded product comprising:
a first molding die having at least one opening forming member projecting from a first forming surface and having a predetermined dimension in lengthwise direction;
a second molding die having at least one rib forming groove on a second forming surface at a position corresponding to a position of the at least one opening forming member;
supporting means provided in the second molding die for supporting a porous skin material; and
pressurizing means for clamping the first and second molding dies and applying a pressure for performing pressure molding for a thermoplastic resin at least before curing in a cavity defined between the first and second molding dies.

The rib forming groove may be longer than the predetermined dimension in lengthwise direction.

The opening forming member may be movable relative to the first molding die, and contacts with the second forming surface of the second molding die at the initial stage of clamping the first and second molding dies.

The opening forming member may comprise a plurality of pins arranged in parallel relationship with a given gap, and the rib forming groove is longer than a total dimension of the plurality of pins in lengthwise direction.

The first molding die may have a separately formed guide portion slidably guiding the opening forming member, and the second molding die has a separately formed exchangeable portion defining the rib forming groove.

The rib forming groove may be formed in a direction perpendicular to a direction along which the given gap between the plurality of pins extends.

The opening forming member may be formed with a predetermined pattern on a top surface thereof.

The rib forming groove may be mesh-shaped, and the predetermined pattern is a honeycomb-shaped groove.

As set forth above, with the present invention, the composite molded product is constructed with the main body formed of a base material with at least one through opening, the skin material integrated with the main body by thermal fusing, and at least one rib at the position corresponding to the through opening, which rib is integral with the main body, extended through the skin material, and formed simultaneously with the main body, the skin material can be protected satisfactorily irrespective of the size of the through opening. Furthermore, with the construction set forth above, greater freedom is provided in designing the composite molded product so that optimum external appearance can be selected depending upon application thereof. Furthermore, the composite molded product according to the present invention can be produced at low cost.

Also, in the preferred construction, a plurality of through openings are defined by at least one bridging member, and the rib is arranged perpendicularly to the bridging member. With such construction, the composite molded material superior in strength can be obtained.

Here, since the shape of the rib can be selected in wide variations, such as parallel straight ribs, concentric ribs, honeycomb-shaped rib, mesh-shaped rib and so forth, the range of selection of the configuration of the rib can be significantly widened depending on types of usage.

In the production process of the composite molded product set forth above, according to the present invention, the product is produced by arranging the skin material between a first (lower) molding die with at least one opening forming member projecting from the forming surface and having a dimension corresponding to the desired dimension of the opening, and a second (upper) molding die defining at least one rib forming groove, supplying the molten or at least non cured thermoplastic resin in the cavity defined between the first and second molding dies at the first molding die side of the skin material, and applying a pressure by clamping to perform pressure molding. Therefore, the molten or non-cured resin can be supplied in a condition where the die is held open, and the metsuke amount (g/m²)of the skin material can be minimized. Thus, the composite molded product can be formed easily at low cost.

The producing apparatus of the composite molded product according to the present invention is constructed with the first molding die having at least one opening forming member projecting from the forming surface and having dimension corresponding the opening to be formed, the second molding die having at least one rib forming groove at the position corresponding to the position of the opening forming member, a supporting member provided in the second molding die and supporting the porous skin material and a pressurizing means for clamping the first and second molding dies to apply a pressure to the non-cured thermoplastic resin in the cavity. Thus, desired composite molded product can be formed easily at low cost.

Also, in the preferred construction, since the length of the rib forming groove is set to be longer than the dimension in the lengthwise direction of the pin array, a flow efficiency of the resin into the rib forming groove can be higher to improve the quality of the product.

In the further preferred embodiment, since the opening forming member is provided for movement relative to the first molding die to contact with the forming surface of the second molding die at the initial stage of clamping process, it makes unnecessary to adjust the distance between the opening forming member in the first molding die and the forming surface of the second molding die to facilitate formation of the opening.

In the preferred construction, the first molding die has a separately formed and exchangeably guiding portion which slidably guides the opening forming member, and the second molding die is provided with a separately formed portion defining the rib forming groove so that configuration of the grill can be varied without exchanging entire die.

The present invention will be understood more from the detailed description given herebelow and from the accompanying drawings of the preferred embodiment of the invention, which, however, should not be taken to be limitative to the present invention, but are for explanation and understanding only.

In the drawings:
Fig. 1 is a perspective view showing a rear parcel shelf as one example of a composite formed product according to the present invention;
Fig. 2 is a partial enlarged perspective view of Fig. 1, illustrated with a part of a skin material be moved and with neglecting a part of rib;
Fig. 3 is a partial section showing one embodiment of a production apparatus of the composite molded product according to the present invention, showing a condition where a mold is opened;
Fig. 4 is a partial section showing one embodiment of a production apparatus of the composite formed product according to the present invention, showing a condition immediately after closing the mold;
Fig. 5 is a perspective view showing one example of an opening forming member in one embodiment of the composite molded product producing apparatus according to the invention;

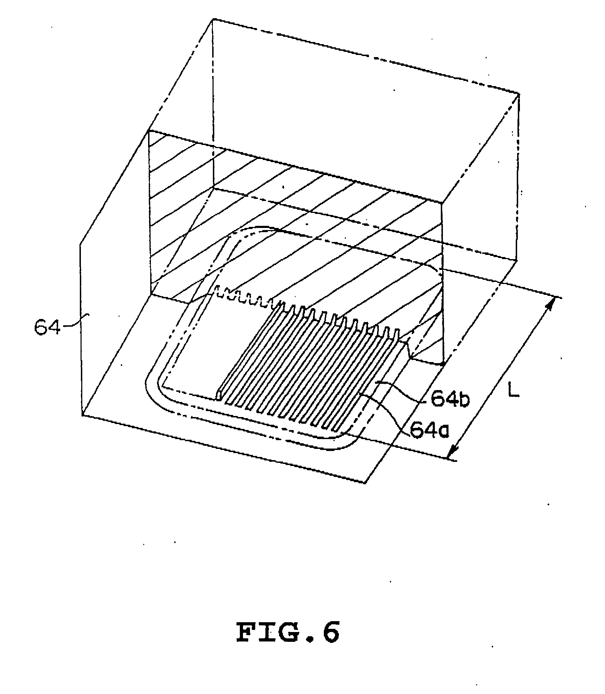

Fig. 6 is a perspective view showing one example of a grill forming mold in one embodiment of the composite molded product producing apparatus according to the invention;

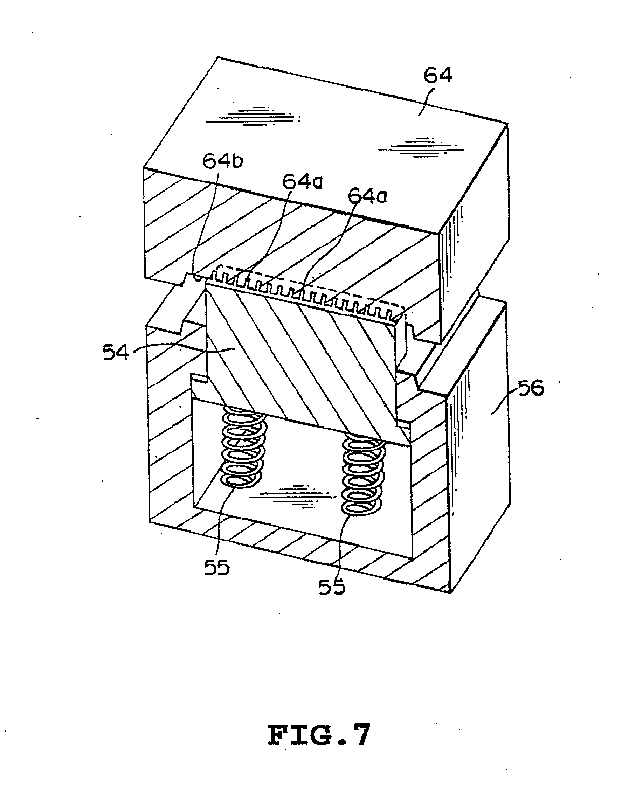

Fig. 7 is a sectional perspective view showing a contacting condition of the opening forming member of Fig. 5 and the grill forming mold of Fig. 6;
Fig. 8 is a partially cut-out and enlarged section of the portion A of Fig. 2;
Fig. 9A is a section taken along line A - A of Fig. 8;
Fig. 9B is a section taken along line B - B of Fig. 8;
Fig. 10A is a perspective view of the conventional rear parcel shelf, showing an intermediate condition in assembling;
Fig. 10B is a perspective view of the conventional rear parcel shelf, as a finished product;
Fig. 11 is a sectional perspective view showing another embodiment of a knock out frame body and a knock out rod in one embodiment of the composite molded product producing apparatus according to the invention;
Fig. 12 is a plan view showing another embodiment of a speaker grill of the composite molded product according to the present invention, illustrated with removing a part of the skin material;
Fig. 13 is a plan view showing a further embodiment of a speaker grill of the composite formed product according to the present invention, illustrated with removing a part of the skin material;

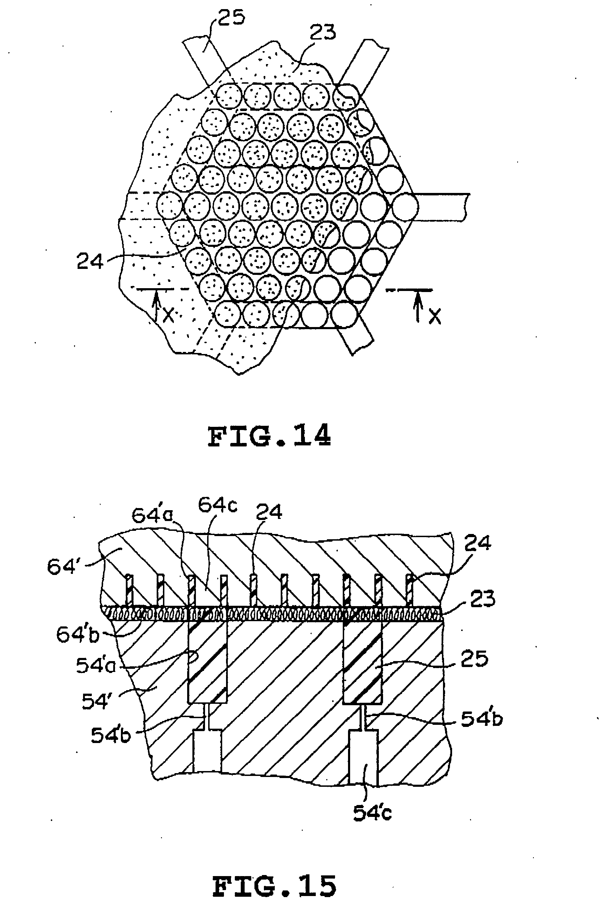

Fig. 14 is a partial enlarged view of Fig. 13, illustrated with removing a part of the skin material and the rib; and
Fig. 15 is a section taken along line X - X of Fig. 14, which is illustrated together with the mold for forming the shown portion of the product.

The present invention will be discussed hereinafter in detail in terms of the preferred embodiment of the invention with reference to the accompanying drawings. In the following description, numerous specific details are set forth in order to provide a thorough understanding of the present invention. It will be obvious, however, to those skilled in the art that the present invention may be practiced without these specific details. For instance, the features illustrated and described as part of one embodiment may be employed in other embodiments for creating further embodiments. It should be noted that throughout the disclosure, like reference numerals identify the same elements. In the disclosure, the term "rib" is used to represent a portion formed on a skin material irrespective of the configuration thereof. In other instance, well-known structures are not shown in order to avoid unnecessary obscuring the present invention.

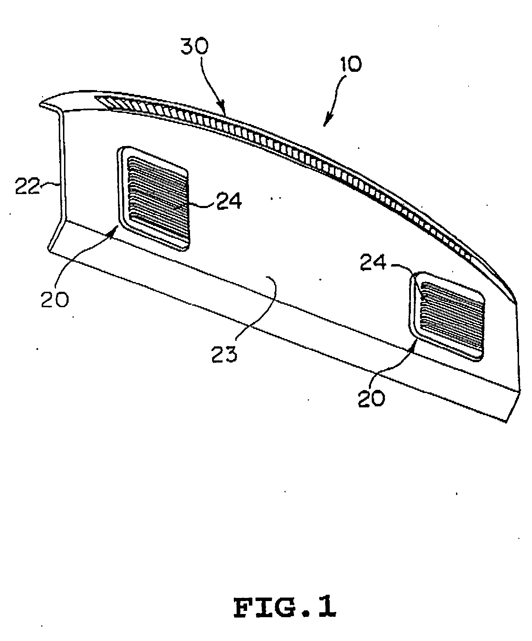

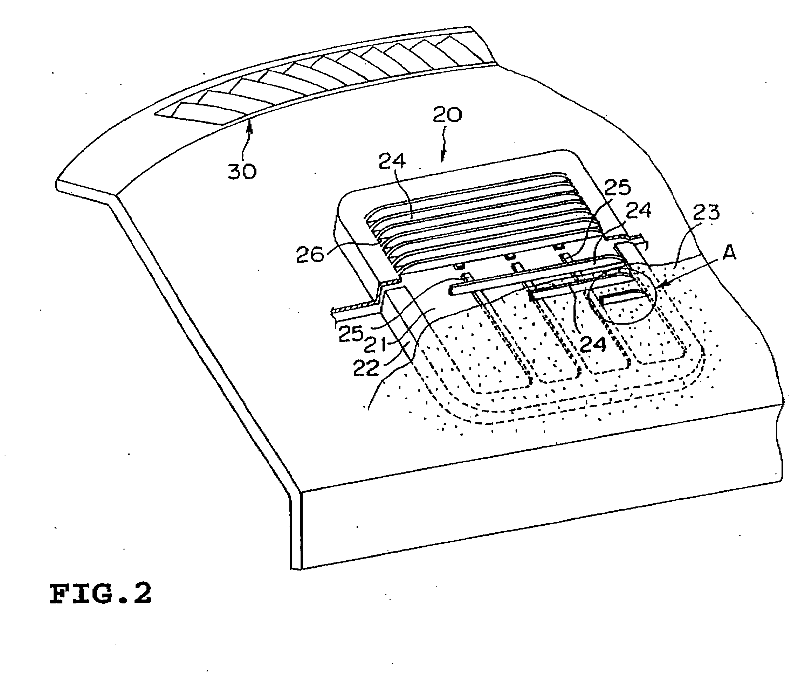

At first, as one example of a composite molded article according to the present invention, an embodiment as applied to a rear parcel shelf of an automotive vehicle will be discussed with reference to Figs. 1 and 2.

In Figs. 1 and 2, reference numeral 10 denotes a rear parcel shelf, in which speaker grill portions 20 are arranged symmetrically with respect to the longitudinal axis of a vehicle, and a drafter grill portion 30 is formed along a rear end portion.

In the speaker grill portion 20, on a surface of a main body 22 which is constructed with a base material of a thermoplastic resin and includes a plurality (four in the shown embodiment) of through openings 21 (see Fig. 2), a porous skin material 23 is integrally molded by thermal fusing. A plurality of ribs 24 extending across the through openings 21 are formed of the same material as the base material, on the surface of the main body 22 partially through the porous structure of the skin material 23, simultaneously with the main body. It should be noted that while the skin material 23 is provided over the entire surface of the main body 22, Fig. 2 is illustrated with removing a part of the skin material 23 for facilitating clear understanding of the invention.

A plurality of through openings 21 are defined by bridging members 25. The bridging members 25 are arranged in parallel relationship with each other with a given interval. On the other hand, a plurality of ribs 24 are formed in parallel and spaced apart relationship from each other with a gap 26 of a given width. The ribs 24 extend in a direction perpendicular to the bridging members 25. Thus, a plurality of ribs 24 form louver in a form covering the underlying skin material 23.

The drafter grill 30 is provided with a plurality of ventilation openings and has a louver integrally molded with the skin material 23 on the surface of the main body 22.

The rear parcel shelf 10 constructed as set forth above is installed in the rear portion of a rear seat of the automotive vehicle. Speakers are arranged below the through openings 21. At this time, since the skin material 23 positioned over the through openings 21 is protected from contact with the passenger or luggage, the strength of the skin material 23 for durability becomes less important to permit formation of large through openings 21 superior in acoustic effect.

Size, number, shape of the ribs 24 can be arbitrarily set as discussed later together with size of the through opening 21.

Next, discussion will be given for a producing apparatus of the rear parcel shelf 10 as set forth above.

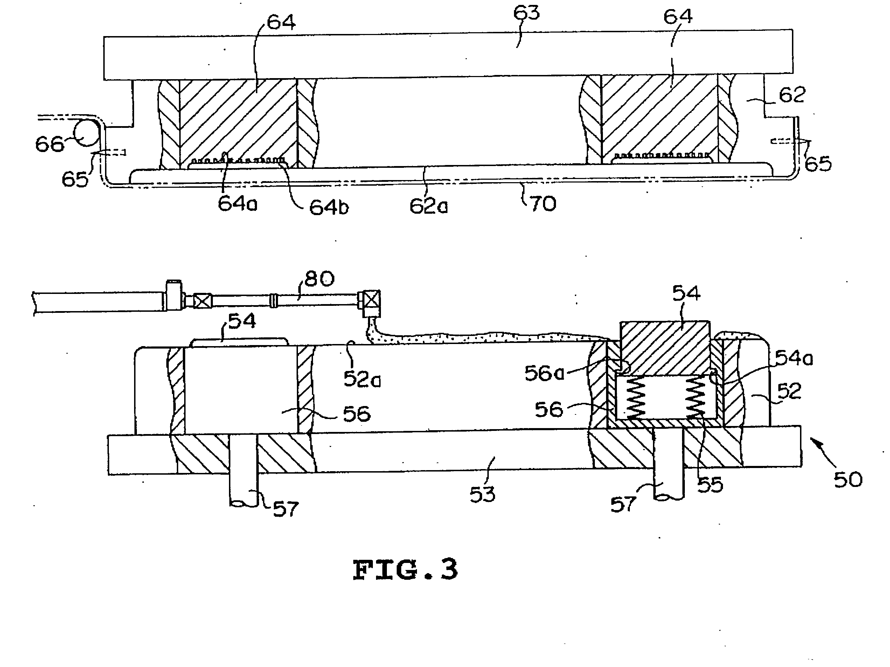

In Fig. 3, reference numeral 52 denotes a lower die as a first forming die which has a pin 54 as an opening forming member projecting from a forming surface and has a predetermined diametrical dimension. Reference numeral 62 denotes an upper die as a second forming die formed with a rib forming groove on a forming surface at a position corresponding to the pin 54.

Upon clamping of the upper die 62 and the lower die 52, the pin 54 may be rigidly secured to the lower die 52 or integrally formed as a part of the lower die, as long as the top end of the pin 54 is projected from the forming surface 52a of the lower die 52 to contact with the forming surface of the upper die. In the shown embodiment, the pin 54 is provided movably relative to the lower die 52 and biased toward the upper die 62 by means of a spring 55. Thus, in the free condition of the lower die 52, the pin 54 is held in a position projecting from the forming surface 52a in a given magnitude set by restricting movement by engaging a flange 54a at the lower portion onto a stepped portion 56a of a knock out frame body 56 by means of the spring 55 disposed between a bottom portion of the knock out frame body 56 and the lower surface of the pin 54.

Also, the lower die 52 is fixed on a lower die base 53. A knock out rod 57 coupled with the knock out frame body 56 is arranged through the lower die base 53. The lower end of the knock out rod 57 is coupled with a not shown driving device so that the knock out frame body 56 is lifted up via the knock out rod 57 relative to the lower die 52 for enabling removal of the molded product from the die.

In Fig. 3, right side thereof shows projecting magnitude of the pin 54 in the free condition of the lower die 52 and left side thereof shows projecting magnitude of the pin 54 in the clamped condition.

The upper die 62 has a separately formed exchangeable grill forming die 64 which has a forming surface 64b formed with the rib forming groove 64a at a position corresponding to the knock out frame body 56. The upper die 62 and the grill forming die 64 are mounted on an upper die base 63 in a known manner, such as bolts and nuts. Reference numeral 65 denotes a needle member as a supporting means for supporting a porous skin material 70, which can be extracted and retracted, and 66 denotes a guide roller for guiding the skin material 70 supplied from a supply roll or so forth.

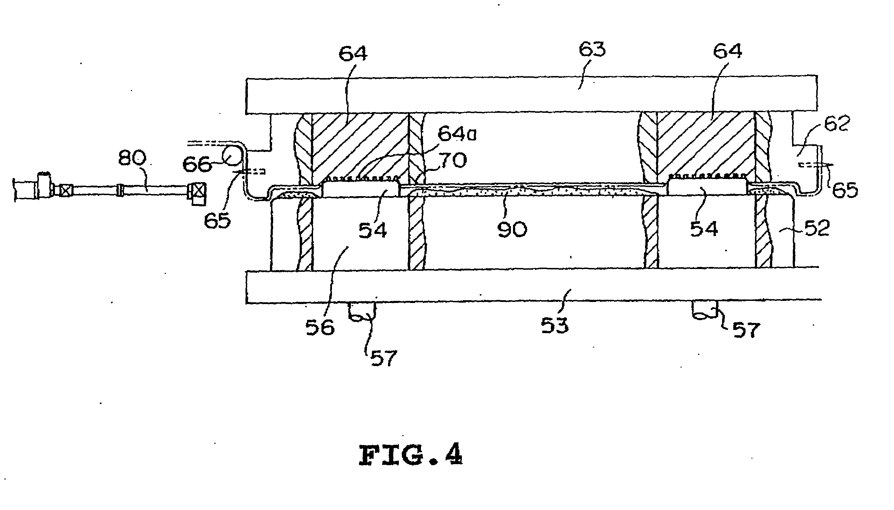

It should be noted that, in Figs. 3 and 4, the grill forming die 64 and the pin 54 are illustrated in a form rotated 90° in a plan view for facilitating clear understanding. Accordingly, when the product is produced by the shown molding die, the orientation of the rib 24 is offset for 90° in relation to the orientation of the rib shown in Fig. 1.

The pin 54 and the rib forming groove 64a are adapted in number and shape adapting to the size, shape of the speaker grill portion 20 formed in the parcel shelf. Therefore, when the opening is small, the number of the rib forming groove 64a can be one or several, and only one pin 54 is arranged in the knock out frame body 56.

When the opening is large, in order to obtain sufficient strength of the rib 24 and smooth flow of the resin, it is preferred to provide a plurality of rib forming grooves 64a and the pins 54 in a following manner.

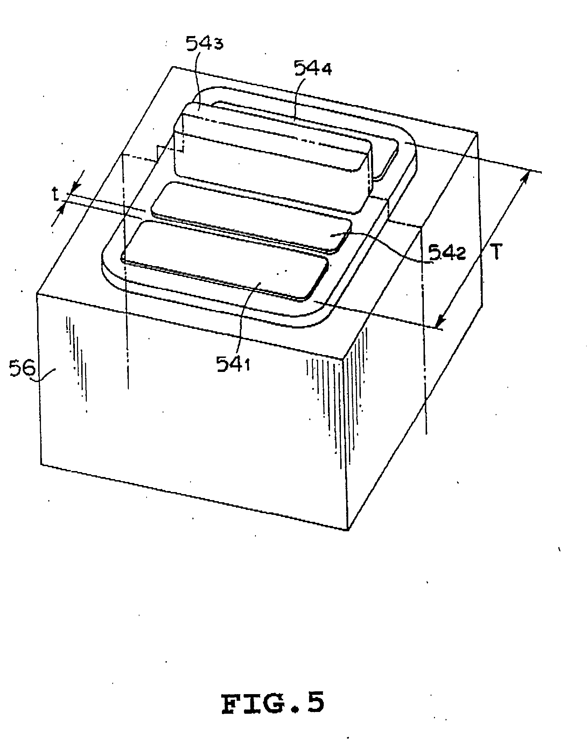

Fig. 5 shows an example, in which four pins 54 are arranged within the knock out frame body 56 in parallel relationship with a given interval t to form a pin array. Therefore, each pin 54 is formed into substantially rectangular shape in plan view. Assuming that a distance between the pins 54₁ and 54₄ located at both ends of the parallel arranged pin array, namely a dimension of the pin array in a direction of parallel arrangement of the pins, which direction will be hereinafter referred to as "lengthwise direction", is T, a length L of a plurality of rib forming groove 64a of the grill forming die 64 corresponding thereto is set to satisfy L > T. It should be noted that a direction perpendicular to the lengthwise direction in the horizontal plane will be hereinafter referred to as "widthwise direction". Also, the rib forming grooves 64a are oriented in the lengthwise direction perpendicular to the direction of gaps extending between parallel arranged pins 54₁ to 54₄.

While a portion to form the drafter grill 30 is not illustrated, on either or both of the lower die 52 and the upper die 62, a plurality of projections in forms corresponding to ventilation openings are projected from forming surfaces 52a and 62a.

Returning to Fig. 3, reference numeral 80 denotes a supply nozzle of an extruder for supplying a thermoplastic resin as the base material on the forming surface 52a of the lower die 52.

It should be noted while it is neglected from illustration, the upper die 62 and the lower die 52 are respectively mounted on an upper die base 63 and a lower die base 53 and are loaded in a press molding apparatus. The press molding apparatus forms a pressurizing means for clamping the molding dies and pressing a molten thermoplastic resin in a cavity defined by the molding dies before curing.

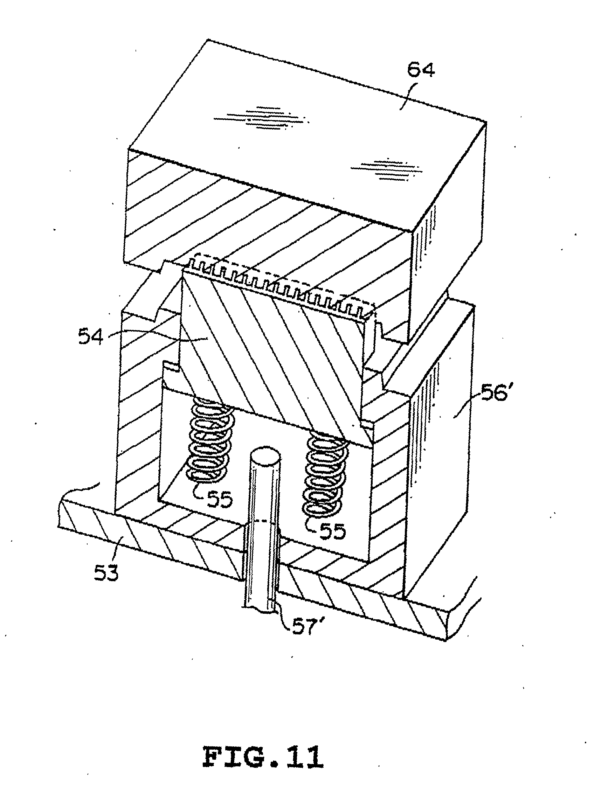

Here, another embodiment of the knock out frame body will be discussed with reference to Fig. 11. In the embodiment set forth above, the knock out frame body 56 and the knock out rod 57 are coupled. Such construction inherently implies setting a large set of load of the spring 55 large. As a solution for this, in another embodiment, the knock out frame body and the knock out rod are not coupled with each other. Namely, the knock out rod 57' extends through the bottom portion of the knock out frame body 56' and the lower die base 53. The upper end of the knock out rod 57' is located at a lower predetermined position so as not to interfere with movement of the pin 54. The lower end of the knock out rod 57' is coupled with a not shown driving device in a manner similar to that in the former embodiment. Thus, upon completion of molding process, by rising the pins 54 via the knock out rod 57' with respect to the knock out frame body 56' and the lower die 52, releasing of the molded product from the die can be done similarly to the former embodiment.

Next, discussion will be given for the production process of the composite molded product, i.e. the rear parcel shelf in the shown embodiments.

At first, as shown in Fig. 3, in a condition where the upper die 62 is opened, the skin material 70 is stretched to cover the entire forming surface 62a with temporarily tacking at both sides by means of needle members 65. Subsequently, with laterally shifting the supply nozzle 80, the thermoplastic resin as the base material is supplied on the forming surface 52a of the lower die 52. It is preferred to supply a greater amount of resin at a portion having greater thickness in the finished composite molded product. After shifting the supply nozzle 80 away from the die, the upper die 62 is lowered. Then, the pins 54 projecting from the lower die 52 in the predetermined magnitude contact with the forming surface 64b of the grill forming die 64 with lifting up the skin material 70. Substantially simultaneously therewith, the cavity between the lower die 52 and the upper die 62 is closed. Clamping is performed by further lowering the upper die 62. By this, the thermoplastic resin 90 is spread into the entire cavity and thus pressure molding is performed.
The skin material 70 is flared by the thermoplastic resin 90 and fitted onto the forming surface 62a of the upper die except for the portion contacting with the forming surface 64b of the grill forming die 64. The thermoplastic resin 90 depressed onto the forming surface 62a of the upper die 62 penetrates into porous structure of the skin material 70 to be thermally welded with the skin material. Simultaneously, the thermoplastic resin in the vicinity of the pins 54 passes through the porous structure of the porous skin material 70 to enter into the rib forming grooves 64a of the grill forming die 64 on the surface of the skin material 70. At the portion of the drafter grill portion, the thermoplastic resin flows around the projections.

Subsequently, a cooling water is introduced through a not shown cooling water passage to cool the upper die 62 and the lower die 52. When the surface of the thermoplastic resin is cured to a certain extent which may maintain the configuration of the rear parcel shelf, the upper die 62 is lifted away from the lower die 52 to open the die. Thereafter, the knock out frame body 56 together with the pins 54 is projected or the pins 54 are projected through the knock out rods 57 or 57' to remove the finished rear parcel shelf as the composite molded product from the lower die 52.

Thus, the through openings 21 are formed in the main body 22 by the pins 54. The through openings 21 are covered by the skin material 23 (70) thermally welded to the bridging members 25 as well as the main body 22. Furthermore, on the surface of the skin material 70 at the position corresponding to the bridging members 25 and the through openings 21, a plurality of ribs 24 transversely extending across the through openings 21 are integrally formed, and in conjunction therewith, the drafter grill 30 is also formed integrally. Thus, the rear parcel shelf, in which all of the main body 22, the skin material, the speaker grills and the drafter grills are integrated, can be obtained.

Here, the mechanism of thermally fusing the skin material on the surface of the main body, and in conjunction therewith passing the thermoplastic resin through the porous structure of the skin material 70 to integrally mold the ribs 24, will be discussed in detail with reference to Figs. 2, 8 and 9.

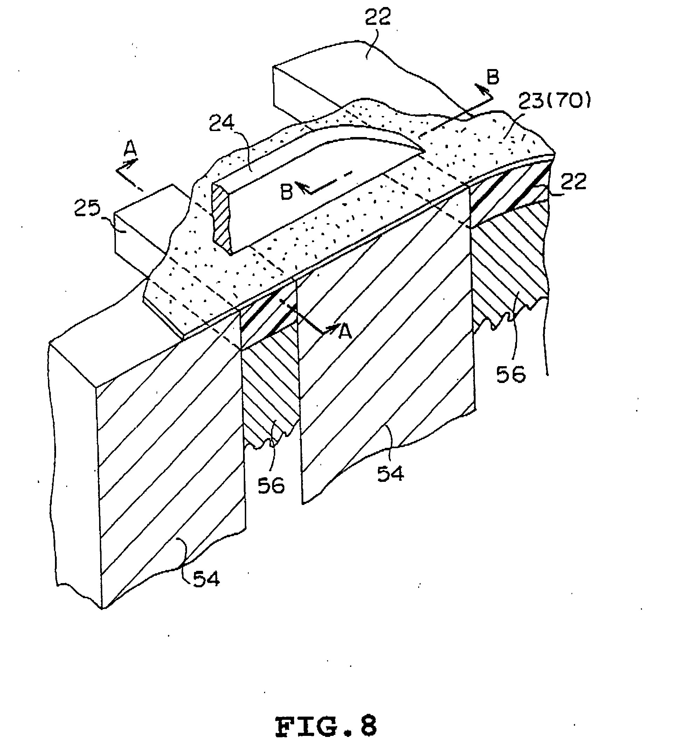

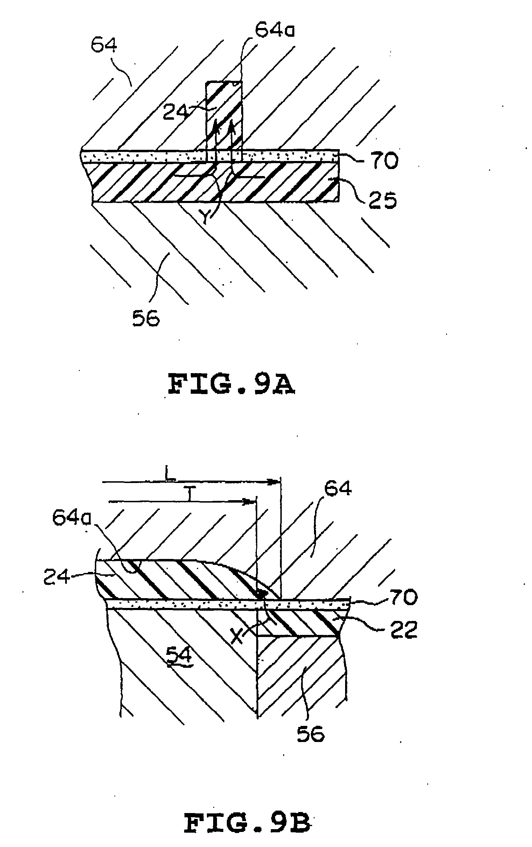

Fig. 8 is an enlarged and partially cut-out section of the portion A of Fig. 2, Fig. 9A is a section taken along line A - A of Fig. 8 and Fig. 9B is a section taken along line B - B of Fig. 8. As can be clear from Fig. 8, in the intervals between the parallel arranged pins 54 projecting from the knock out frame body 56, clearances or gaps are formed upon clamping. The molten thermoplastic resin flows into the gaps to form the bridging member 25 integrally with the main body 22. As set forth above, the ribs 24 are formed perpendicularly to the bridging member 25 and cover the underlying skin material 23 (70).

The ribs 24 are formed in the following manner. By the pressure upon clamping, the molten thermoplastic resin entering into the gaps (portions corresponding to the bridging member 25) passes through the porous structure of the skin material as shown by arrow Y to flow into the rib forming grooves 64a of the grill forming die 64. Also, at opposite ends of the plurality of pins 54, thermoplastic resin entering into a gap defined by step portion due to height difference of the top ends of the pin 54 and the knock out frame 56 passes through the porous structure of the skin material to enter into the grill forming grooves 64a of the grill forming die 64 as shown by arrow X.

As set forth above, arranging the intervals between parallel arranged pins and the rib forming grooves 64a so that the bridging members 25 and the ribs 24 are arranged perpendicularly with respect to each other, a flow path of the molten thermoplastic resin can be minimized to contribute for improvement of the product quality. Also, as can be clear from Fig. 9B, by providing greater length L for the rib forming groove 64a than the dimension T in the lengthwise direction of the overall pin array, the molten thermoplastic resin may also flow into the rib forming grooves 64a even through both end portions of the groove to make formation of the rib 24 efficient. It should be noted that when the length of the rib 24 is short, the relationship between the lengthwise dimension of the pin array and the length of the rib forming groove becomes less important.

It should be appreciated that the shape of the ribs to be formed on the surface side of the skin material 23 is not specified to the parallel rib configuration as illustrated but can be selected arbitrary.

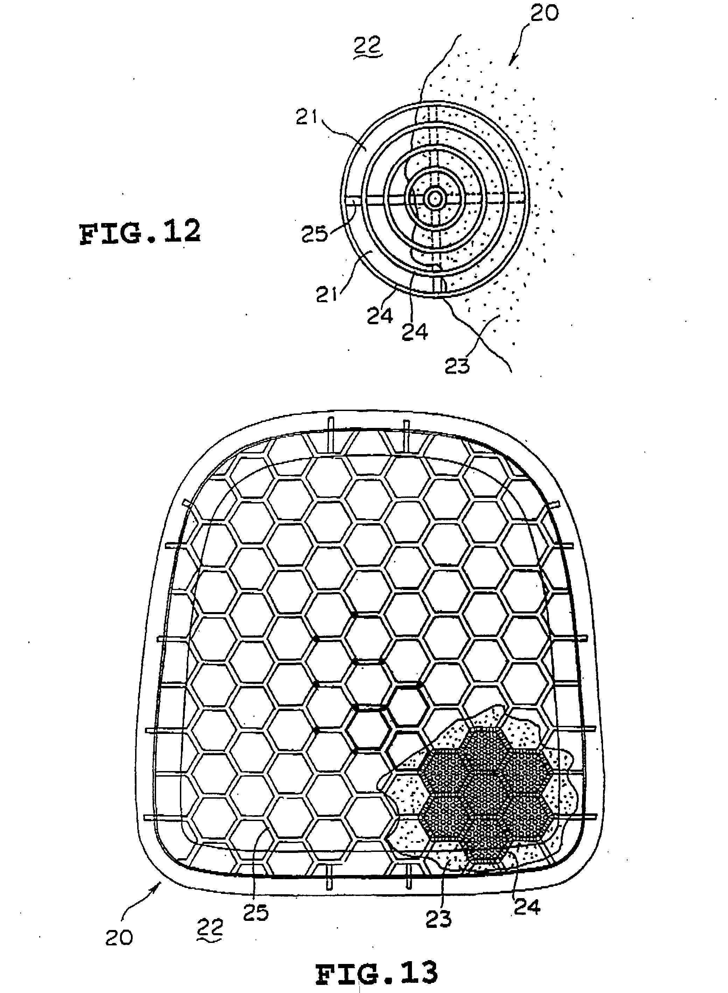

For instance, in the case of a circular speaker grill as shown in Fig. 12, the ribs 24 may be concentric circular configuration. In this case, a plurality of (four in the shown embodiment) bridging members 25 defining the through openings 21 may be arranged radially to intersect with the ribs 24 in a substantially perpendicular relationship. Also, while not illustrated, in this case, the four pins 54 for forming the through openings 21 have essentially fan shaped cross-section, and the grill forming die 64 is formed with concentrically arranged rib forming grooves 64a.

Also, Fig. 13 shows another embodiment. The speaker grill 20 is formed into horseshoe-shaped configuration, the bridging member 25 underlying the skin material 23 is formed into honeycomb configuration which is superior in strength, and the rib 24 to be formed on the surface of the skin material is mesh-shaped . In the shown embodiment, in order to form mesh-shaped rib 24, the grill forming die 64' is provided with a plurality of regularly arranged cylindrical projections 64c projecting from the rib forming surface 64'b to define rib forming groove 64'a between adjacent cylindrical projections 64c. Also, in order to form the honeycomb-shaped bridging member 25, a single large pin 54' is employed. The pin 54' is formed with honeycomb-shaped groove 54'a on the top surface. At several positions in the bottom of the honeycomb groove 54'a in the center portion of the horseshoe-shaped speaker grill 20 (see Fig. 13), the honeycomb groove 54'a is communicated with ventilation holes 54'c via orifices 54'b. The ventilation holes 54'c are connected to a not shown vacuum pump.

Thus, upon pressure molding after supplying the molten thermoplastic resin, molding is performed with ventilating the air in the die through several positions in the bottom portion of the honeycomb-shaped groove 54'a located at center portion of the speaker grill 20. This assures distribution of the molten thermoplastic resin through the mesh-shaped rib forming groove 64'a and the honeycomb-shaped groove 54'a, uniformly.

Concretely, preferred thermoplastic resin as the base material may be polypropylene, polyethylene or so forth. In view of the penetration ability for the porous skin material discussed later, the material having melt index (MI) value of 20 to 60 g/10 min., more preferably 30 to 60 g/10 min may be used. While a material having a low flow ability is advantageous in strength, the material having the above-identified MI value is preferred for necessity of penetration through the skin material, in the present invention.

As the porous skin material is specified to those having fluid permeability, such as a woven fabric, knit, non-woven fabric of polypropylene fiber, polyester fiber. Interior materials of automotive vehicle, such as leather, vinyl chloride and so forth are in appropriate. Amongst preferred materials, non-woven fabric, tricot are particularly preferred. Examples to be judged as applicable through experiments will be listed in the following table 1.

**TABLE 1**

| In the case of non-woven fabric: | | | |
|---|---|---|---|
| | Kind | Material | Metsuke (g/m²) |
| a | Plane | polypropylene polyethyleneterephthale | 100 to 300 |
| b | Velour | polypropylene polyethyleneterephthale | 100 to 300 |
| c | Raised Needle | polypropylene polyethyleneterephthale | 100 to 300 |

It should be noted that as one example of a) of the table 1, MK88 (polypropylene 100%, Metsuke 300 g/m²) available from Japan Bairin K.K., as one example of b) of the table 1, MH55 (polyethylene terephthalate 100%, Metsuke 250 g/m²) available from Japan Bairin K.K. and as one example of c) of the table 1, tradename "Carmat" (polyethylene terephthalate 100%, Metsuke 300 g/m²) available from Toyo Boseki K.K. can be listed.

In the case of tricot, Metsuke in a range of 180 to 250 g/m² was preferred.

Upon molding by employing the base material and the skin material, it is confirmed that molding temperature and molding pressure of the thermoplastic resin are respectively in a range of 180 to 200 °C and higher than or equal to 50 kg/cm² in view of constraint that the skin material is not molten, permeability to the skin material of the base material in the portion where the speaker grill is formed, and restricting exuding to the surface of the skin material in the portion other than the grill forming portion. A pressurizing period fluctuates slightly depending upon the temperature of the thermoplastic resin of the base material, but favorable result can be obtained in a range of 20 to 25 sec.

Further, in the case of different combination of the base material and the skin material, it is confirmed that the same molding condition is applicable for combination of polypropylene as base material and polyethylene terephthalate as surface material and vice versa.

It is possible that the base material having lower flow ability is employed or the skin material having smaller metsuke is employed for the purpose of lowering of production cost. When the base material having MI value in a range of 20 to 30 g/10 min., the molding temperature is set at higher temperature, at 200 °C. When a non-woven fabric having metsuke amount smaller than or equal to 150 g/m² and down to 100 g/m², the base material having MI value of 60 g/10 min. is to be employed and the molding temperature is set to be lower at 180 °C.

Further, it is confirmed that when the pin 54 is movable relative to the lower die 52 and pressurization is to be performed in the above-mentioned molding pressure condition, a necessary total biasing force for preventing the pin 54 from lowering (away from the speaker grill forming surface) has to be set in a range of 10 to 20 tons.

It is further confirmed that the preferred cross-sectional shape of the parallel or concentric rib 24 has a substantially isosceles triangular configuration in view of die releasing characteristics. Furthermore, it is confirmed that greater than or equal to 2 mm in thickness at the bottom portion and shorter than or equal to 10 mm in height are preferred in view of formability.

In the case of the construction with the mesh-shaped rib and honeycomb-shaped bridging member, and when a longer side dimension of the speaker grill 20 is approximately 20 cm, the rear parcel shelf with good external appearance can be obtained by setting the pitch of the cylindrical projections of 1.8 mm diameter at 2.6 mm, and setting the thickness of the bridging member at about 1.9 mm.

Although the invention has been illustrated and described with respect to exemplary embodiment thereof, it should be understood by those skilled in the art that the foregoing and various other changes, omissions and additions may be made therein and thereto.

For instance, while the foregoing discussion has been given in terms of the automotive rear parcel shelf as the composite molded product, the present invention is also applicable for vehicular interior material, such as a lining of the vehicular door, and exterior material of acoustic instruments, for which similar functions are required.

## Claims

1. An interior part of a vehicle in the form of a lining of a vehicle door or a rear parcel shelf comprising:
a main body (22) formed of a base material of a thermoplastic resin and defining at least one through opening (21);
a porous skin material (23) integrally molded with the main body (22) on a substantially entire surface thereof including a portion corresponding to said at least one through opening by thermal fusing; and
at least one rib (24) molded on a surface of said skin material (23) at a position corresponding to the position of said at least one through opening (21), said at least one rib (24) being integrated with said main body (22) through porous structure of said skin material (23) at a position outside said at least one through opening (24).

2. A composite molded product as set forth in claim 1, wherein said main body (22) has at least one bridging member (25) dividing said at least one through opening (21) into a plurality of through openings (21) underlying said skin material (23), and said at least one rib (24) is arranged perpendicularly to said bridging member (25).

3. A composite molded product as set forth in claim 1, **characterized in that** said at least one rib (24) is a plurality of parallel ribs (24).

4. A composite molded product as set forth in claim 1, **characterized in that** said at least one rib (24) is a plurality of concentric ribs.

5. A composite molded product as set forth in claim 2, **characterized in that** said at least one rib (24) is a mesh-shaped configuration, and said at least one bridging member (25) is a honeycomb-shaped configuration.

6. A composite molded product as set forth in claim 1, which is used as an interior part of a vehicle.

7. A composite molded product as set forth in claim 1, which is used as an exterior part of an acoustic instrument.

8. A production process of a composite molded product **characterized by** comprising the steps of:
- providing a first molding die (52) having at least one opening forming member (54) projecting from a first forming surface (52a) and having a predetermined dimension in lengthwise direction;
- providing a second molding die (62) having at least one rib forming groove (64a) on a second forming surface (62a) at a position corresponding to a position of said at least one opening forming member (54);
- arranging a porous skin material (70) between said first and second molding dies; and
- supplying a base material of a thermoplastic resin at least before curing, into a cavity defined between said first and second molding dies exclusively at said first forming die side (52a) of said skin material (70); and
- clamping said first and second molding dies (52, 62) and applying a pressure for performing pressure molding.

9. A production process as set forth in claim 8, **characterized in that** said rib forming groove (64a) has a length longer than said predetermined dimension in the lengthwise direction.

10. A production process as set forth in claim 8, **characterized in that** said opening forming member (54) is movable relative to said first molding die (52), and contacts with said second forming surface (62a) of said second molding die (62) at initial stage of clamping step.

11. A producing apparatus for a composite molded product **characterized by** comprising:
a first molding die (52) having at least one opening forming member (54) projecting from a first forming surface and having a predetermined dimension in lenghtwise direction;
a second molding die (62) having at least one rib forming groove (64a) on a second forming surface at a position corresponding to a position of said at least one opening forming member (54) for supplying a base material of a thermoplastic resin at least before curing, into a cavity defined between said first and second molding dies exclusively at said first forming die side (52a) of said skin material (70);
supporting means (65) provided in said second molding die (62) for supporting a porous skin material (70); and pressurizing means for clamping said first and second molding dies (52, 62) and applying a pressure for performing pressure molding for a thermoplastic resin at least before curing in a cavity defined between said first and second molding dies (52, 62).

12. A producing apparatus as set forth in claim 11, **characterized in that** said rib forming groove (64a) is longer than said predetermined dimension in lengthwise direction.

13. A producing apparatus as set forth in claim 11, **characterized in that** said opening forming member (54) is movable relative to said first molding die (52), and contacts with said second forming surface (62a) of said second molding die (62) at the initial stage of clamping of said first and second molding dies (52, 62).

14. A producing apparatus as set forth in claim 11, **characterized in that** said opening forming member comprises a plurality of pins (54) arranged in parallel relationship with a given gap, and said rib forming groove (64a) is longer than a total dimension of said plurality of pins (54) in lengthwise direction.

15. A producing apparatus as set forth in claim 11, **characterized in that** said first molding die (52) has a separately formed guide portion slidably guiding said opening forming member (54), and said second molding die (62) has a separately formed exchangeable portion (64) defining said rib forming groove (64a).

16. A producing apparatus as set forth in claim 14, **characterized in that** said rib forming groove (64a) is formed in a direction perpendicular to a direction along which said given gap between said plurality of pins (54) extends.

17. A producing apparatus as set forth in claim 11, **characterized in that** said opening forming member (54) is formed with a predetermined pattern on a top surface thereof.

18. A producing apparatus as set forth in claim 17, **characterized in that** said rib forming groove (64a) is in mesh-shaped configuration, and said predetermined pattern is a honeycomb-shaped groove.

## Patentansprüche

1. Innenelement eines Fahrzeugs in der Gestalt einer Verkleidung einer Fahrzeugtür oder einer hinteren Gepäckablage, umfassend:
einen Hauptkörper (22), welcher aus einem Basismaterial aus einem thermoplastischen Harz ausgebildet ist und mindestens eine Durchgangsöffnung (21) definiert;
ein poröses Überzugsmaterial (23), welches mit dem Hauptkörper (22) an einer im wesentlichen vollständigen Oberfläche davon einstückig ausgebildet ist, wobei dies einen Abschnitt umfaßt, welcher der mindestens einen Durchgangsöffnung entspricht, durch Warmverschmelzen; und
mindestens eine Rippe (24), welche an einer Oberfläche des Überzugsmaterials (23) bei einer Position, welche der Position der mindestens einen Durchgangsöffnung (21) entspricht, ausgebildet ist, wobei die mindestens eine Rippe (24) durch die poröse Struktur des Überzugsmaterials (23) hindurch an einer Position außerhalb der mindestens einen Durchgangsöffnung einstückig mit dem Hauptkörper (22) ausgebildet ist.

2. Verbundformteil nach Anspruch 1, wobei der Hauptkörper (22) mindestens ein Stegelement (25) aufweist, welches die mindestens eine Durchgangsöffnung (21) in eine Vielzahl von Durchgangsöffnungen (21), welche unter dem Überzugsmaterial (23) liegend angeordnet sind, teilt, und die mindestens eine Rippe (24) lotrecht zu dem Stegelement (25) angeordnet ist.

3. Verbundformteil nach Anspruch 1, **dadurch gekennzeichnet, daß** die mindestens eine Rippe (24) eine Vielzahl paralleler Rippen (24) ist.

4. Verbundformteil nach Anspruch 1, **dadurch gekennzeichnet, daß** die mindestens eine Rippe (24) eine Vielzahl konzentrischer Rippen ist.

5. Verbundformteil nach Anspruch 2, **dadurch gekennzeichnet, daß** die mindestens eine Rippe (24) eine netzartige Anordnung ist und das mindestens eine Stegelement (25) eine bienenwabenförmige Anordnung ist.

6. Verbundformteil nach Anspruch 1, welches als Innenelement eines Fahrzeugs verwendet wird.

7. Verbundformteil nach Anspruch 1, welches als Außenelement eines akustischen Instruments verwendet wird.

8. Herstellungsverfahren eines Verbundformteils, **dadurch gekennzeichnet, daß** es die folgenden Schritte umfaßt:
- Vorbereiten einer ersten Preßform (52), welche mindestens ein Öffnungsausbildungselement (54) aufweist, welches von einer ersten Ausbildungsoberfläche (52a) hervorsteht und eine vorbestimmte Ausdehnung in Längsrichtung aufweist;
- Vorsehen einer zweiten Preßform (62), welche mindestens eine Rippenausbildungsvertiefung (64a) an einer zweiten Ausbildungsoberfläche (62a) an einer Position, welche einer Position des mindestens einen Öffnungsausbildungselements (54) entspricht, aufweist;
- Anordnen eines porösen Überzugsmaterials (70) zwischen der ersten und zweiten Preßform; und
- Einführen eines Basismaterials aus einem thermoplastischen Harz spätestens vor dem Härten in einen Hohlraum, welcher zwischen der ersten und zweiten Preßform definiert ist, ausschließlich auf der ersten Preßformseite (52a) des Überzugsmaterials (70); und
- Zusammendrücken der ersten und zweiten Preßform (52, 62) und Ausüben eines Drucks zum Durchführen eines Formpressens.

9. Herstellungsverfahren nach Anspruch 8, **dadurch gekennzeichnet, daß** die Rippenausbildungsvertiefung (64a) eine Länge, welche länger als die vorbestimmte Ausdehnung in der Längsrichtung ist, aufweist.

10. Herstellungsverfahren nach Anspruch 8, **dadurch gekennzeichnet, daß** das Öffnungsausbildungselement (54) relativ zu der ersten Preßform (52) beweglich ist und die zweite Ausbildungsoberfläche (62a) der zweiten Preßform (62) in einem Anfangsstadium des Zusammendrückschritts berührt.

11. Herstellungsvorrichtung für ein Verbundformteil, **dadurch gekennzeichnet, daß** diese umfaßt:
eine erste Preßform (52), welche mindestens ein Öffnungsausbildungselement (54) aufweist, welches von einer ersten Ausbildungsoberfläche hervorsteht und eine vorbestimmte Ausdehnung in Längsrichtung aufweist;
eine zweite Preßform (62), welche mindestens eine Rippenausbildungsvertiefung (64a) an einer zweiten Ausbildungsoberfläche an einer Position aufweist, welche einer Position des mindestens einen Öffnungsausbildungselements (54) entspricht, zum Einführen eines Basismaterials aus einem thermoplastischen Harz spätestens vor dem Härten in einen Hohlraum, welcher zwischen der ersten und zweiten Preßform definiert ist, ausschließlich auf der ersten Preßformseite (52a) des Überzugsmaterials (70),
eine Halteeinrichtung (65), welche in der zweiten Preßform (62) zum Halten eines porösen Überzugsmaterials (70) vorgesehen ist; und eine Druckeinrichtung zum Zusammendrücken der ersten und zweiten Preßform (52, 62) und zum Ausüben eines Drucks zum Durchführen eines Formpressens eines thermoplastischen Harzes spätestens vor dem Härten in einem Hohlraum, welcher zwischen der ersten und zweiten Preßform definiert ist.

12. Herstellungsvorrichtung nach Anspruch 11, **dadurch gekennzeichnet, daß** die Rippenausbildungsvertiefung (64a) länger als die vorbestimmte Ausdehnung in Längsrichtung ist.

13. Herstellungsvorrichtung nach Anspruch 11, **dadurch gekennzeichnet, daß** das Öffnungsausbildungselement (54) gegen die erste Preßform (52) beweglich ist und die zweite Ausbildungsoberfläche (62a) der zweiten Preßform (62) in dem Anfangsstadium eines Zusammendrückens der ersten und zweiten Preßform (52, 62) berührt.

14. Herstellungsvorrichtung nach Anspruch 11, **dadurch gekennzeichnet, daß** das Öffnungsausbildungselement eine Vielzahl von Zapfen (54) umfaßt, welche in paralleler Beziehung mit einem gegebenen Spalt angeordnet sind, und die Rippenausbildungsvertiefung (64a) länger als eine Gesamtausdehnung der Vielzahl von Zapfen (54) in Längsrichtung ist.

15. Herstellungsvorrichtung nach Anspruch 11, **dadurch gekennzeichnet, daß** die erste Preßform (52) einen getrennt ausgebildeten Führungsabschnitt aufweist, welcher das Öffnungsausbildungselement (54) gleitend führt, und die zweite Preßform (62) einen getrennt ausgebildeten austauschbaren Abschnitt (64) aufweist, welcher die Rippenausbildungsvertiefung (64a) definiert.

16. Herstellungsvorrichtung nach Anspruch 14, **dadurch gekennzeichnet, daß** die Rippenausbildungsvertiefung (64a) in einer Richtung ausgebildet ist, welche lotrecht zu einer Richtung verläuft, in welcher der gegebene Spalt zwischen der Vielzahl von Zapfen (54) verläuft.

17. Herstellungsvorrichtung nach Anspruch 11, **dadurch gekennzeichnet, daß** das Öffnungsausbildungselement (54) mit einem vorbestimmten Muster an einer oberen Oberfläche davon ausgebildet ist.

18. Herstellungsvorrichtung nach Anspruch 17, **dadurch gekennzeichnet, daß** die Rippenausbildungsvertiefung (64a) eine netzförmige Gestaltung aufweist und das vorbestimmte Muster eine bienenwabenförmige Vertiefung ist.

## Revendications

1. Partie intérieure d'un véhicule sous la forme d'un habillage de portière ou de plage arrière de véhicule, comprenant :
un corps principal (22) formé par un matériau de base en résine thermoplastique et définissant au moins un orifice traversant (21),
un matériau poreux formant peau (23) intégralement moulé par fusion thermique avec le corps principal (22) sur pratiquement toute la surface de ce dernier, y compris une portion correspondant audit orifice traversant, et
au moins une nervure (24) moulée sur la surface dudit matériau formant peau (23) à une position correspondant à la position dudit au moins un orifice traversant (21), ladite au moins une nervure (24) étant incorporée dans ledit corps principal (22) au moyen de la structure poreuse dudit matériau formant peau (23) à une position située à l'extérieur dudit au moins un orifice traversant (24).

2. Produit composite moulé selon la revendication 1, ledit corps principal (22) ayant au moins un élément en pont (25) divisant ledit au moins un orifice traversant (22) en plusieurs orifices traversants (21) sous-jacents audit matériau formant peau (23), ladite au moins une nervure (24) étant disposée perpendiculairement audit élément en pont (25).

3. Produit composite moulé selon la revendication 1, **caractérisé en ce que** ladite au moins une nervure (24) est constituée par une pluralité de nervures parallèles (24).

4. Produit composite moulé selon la revendication 1, **caractérisé en ce que** ladite au moins une nervure (24) est constituée par une pluralité de nervures concentriques.

5. Produit composite moulé selon la revendication 2, **caractérisé en ce que** ladite au moins une nervure (24) présente une structure maillée et ledit au moins un élément en pont (25) une structure alvéolée.

6. Produit composite moulé selon la revendication 1, qui est utilisé comme pièce intérieure d'un véhicule.

7. Produit composite moulé selon la revendication 1, qui est utilisé comme pièce extérieure d'un instrument acoustique.

8. Méthode de production d'un produit composite moulé, **caractérisée en ce qu'**elle comporte les étapes consistant à :
- prévoir une première matrice de moulage (52) comportant au moins un élément de formage d'un orifice (54) faisant saillie d'une première surface de formage (52a) et dont la dimension est prédéterminée dans le sens longitudinal,
- prévoir une seconde matrice de moulage (62) comportant au moins une rainure de formage d'une nervure (64a) sur une seconde surface de formage (62a) à une position correspondant à une position dudit au moins un élément de formage d'un orifice (54),
- mettre en place un matériau poreux formant peau (70) entre lesdites première et seconde matrices de moulage (52, 62),
- appliquer une matière de base en résine thermoplastique au moins avant le durcissement, dans une cavité définie entre lesdites première et seconde matrices de moulage, exclusivement du côté de la première desdites matrices de formage (52a) dudit matériau formant peau (70) et
- serrer lesdites première et seconde matrices de moulage (52, 62) et appliquer une pression pour réaliser un moulage sous pression.

9. Méthode de production selon la revendication 8, **caractérisée en ce que** la longueur de ladite rainure de formage d'une nervure (64a) est supérieure à ladite dimension prédéterminée dans le sens longitudinal.

10. Méthode de production selon la revendication 8, **caractérisée en ce que** ledit élément de formage d'un orifice (54) est mobile par rapport à ladite première matrice de moulage (52) et entre en contact avec la seconde surface de formage (62a) de ladite seconde matrice de moulage (62) au premier stade de l'étape de serrage.

11. Equipement de production pour un produit composite moulé, **caractérisé en ce qu'**il comporte :
une première matrice de moulage (52) comportant au moins un élément de formage d'un orifice (54) faisant saillie d'une première surface de formage et dont une dimension est prédéterminée dans le sens longitudinal,
une seconde matrice de moulage (62) comportant au moins une rainure de formage d'une nervure (64a) sur une seconde surface de formage à une position correspondant à une position dudit au moins un élément de formage d'un orifice (54) pour appliquer une matière de base en résine thermoplastique au moins avant le durcissement, dans une cavité définie entre lesdites première et seconde matrices de moulage, exclusivement du côté de la première desdites matrices de formage (52a) dudit matériau formant peau (70),
des moyens de soutien (65) prévus dans ladite seconde matrice de moulage (62) pour soutenir un matériau poreux formant peau (70) et des moyens de pressurisation pour assurer le serrage desdites première et seconde matrices de moulage (52, 62) et appliquer une pression pour réaliser un moulage sous pression pour une résine thermoplastique au moins avant le durcissement dans une cavité définie entre lesdites première et seconde matrices de moulage (52, 62).

12. Equipement de production selon la revendication 11, **caractérisé en ce que** ladite rainure de formage d'une nervure (64a) est plus longue que ladite dimension prédéterminée dans le sens longitudinal.

13. Equipement de production selon la revendication 11, **caractérisé en ce que** ledit élément de formage d'un orifice (54) est mobile par rapport à ladite première matrice de moulage (52) et entre en contact avec la seconde surface de formage (62a) de ladite seconde matrice de moulage (62) au premier stade de l'étape de serrage desdites première et seconde matrices de moulage (52, 62).

14. Equipement de production selon la revendication 11, **caractérisé en ce que** ledit élément de formage d'un orifice comporte une pluralité de broches (54) disposées en parallèle selon un espacement donné, et ladite rainure de formage d'une nervure (64a) présente une longueur supérieure à une dimension totale de ladite pluralité de broches (54) dans le sens longitudinal.

15. Equipement de production selon la revendication 11, **caractérisé en ce que** la première matrice de moulage (52) comprend une partie de guidage formée séparément, qui guide de manière glissante ledit élément de formage d'un orifice (54), et la seconde matrice de moulage (62) comprend une partie interchangeable formée séparément (64) définissant ladite rainure de formage d'une nervure (64a).

16. Equipement de production selon la revendication 14, **caractérisé en ce que** ladite rainure de formage d'une nervure (64a) est formée dans une direction perpendiculaire à une direction dans laquelle s'étend ledit espacement donné entre ladite pluralité de broches (54).

17. Equipement de production selon la revendication 11, **caractérisé en ce que** ledit élément de formage d'un orifice (54) est formé avec un motif prédéterminé sur une surface supérieure de ce dernier.

18. Equipement de production selon la revendication 17, **caractérisé en ce que** ladite rainure de formage d'une nervure (64a) présente une structure maillée, et ledit motif prédéterminé est une rainure alvéolée.
